# FASCICULE DE BREVET EUROPEEN

(11) **EP 2 587 086 B1**
(45) Date de publication et mention de la délivrance du brevet: **04.06.2014**
(21) Numéro de dépôt: 12189181.6
(22) Date de dépôt: 19.10.2012
(51) Int. Cl.: F16D 65/097, F16D 69/04

(54) **Dispositif de freinage pour véhicule ferroviaire**
Bremsvorrichtung für Schienenfahrzeug
Braking device for a railway vehicle

(30) Priorité: 28.10.2011 FR 1159826
(43) Date de publication de la demande: 01.05.2013
(73) Titulaire: Société Nationale des Chemins de Fer Français - SNCF, 75014 Paris (FR)
(72) Inventeur: Buffechoux, Michel, 72000 LE MANS (FR); Rouyer, Patrick, 72100 LE MANS (FR); Menardo, Jean-Jacques, 67540 OSTWALD (FR); Reignard, Jean, 49100 ANGERS (FR)
(74) Mandataire: Argyma

(56) Documents cités:
- DE-A1- 1 755 472
- DE-A1- 2 547 530
- US-A- 2 504 712

## Description

La présente invention concerne le domaine du freinage des véhicules ferroviaires et, plus particulièrement, la fixation d'une garniture de freinage sur un porte-garniture.

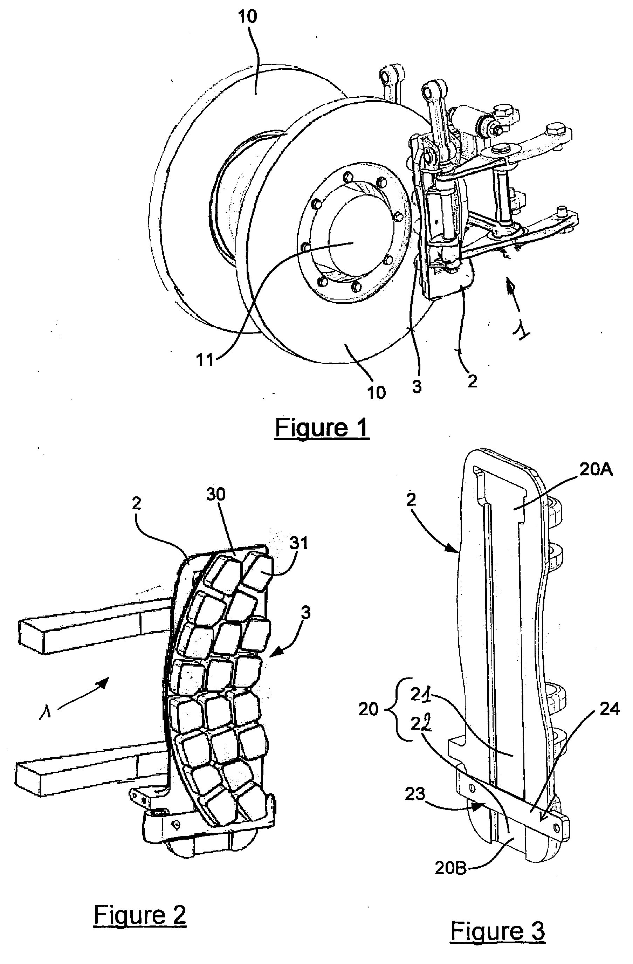

De manière classique, un véhicule ferroviaire comporte une pluralité d'essieux 11 sur lesquels sont fixés des disques de frein 10 comme représenté à la figure 1. Pour permettre le freinage du véhicule ferroviaire, le véhicule ferroviaire comporte un dispositif de freinage 1 comprenant au moins un porte-garniture 2 sur lequel est montée une garniture de freinage 3. Lors du freinage, la garniture 3 est appuyée sur le disque de frein 10. Le frottement de la garniture 3 sur le disque de frein 10 réduit la vitesse de rotation de l'essieu 11 ce qui diminue la vitesse du véhicule ferroviaire. De manière classique, le dispositif de freinage 1 comporte un mécanisme (non référencé), connu de l'homme du métier sous la désignation de timonerie, adapté pour appuyer une garniture de freinage 3 sur chaque face du disque de frein 10 comme représenté à la figure 1.

En référence à la figure 2, une garniture de freinage 3 comporte traditionnellement une embase métallique 30 comprenant, sur une première face, des plots de frottement 31 en matière organique ou en matière frittée destinés à venir en contact avec le disque de frein 10 et comprenant, sur une deuxième face, un pied de fixation ayant une forme en queue d'aronde (non représenté).

Comme illustré à la figure 3, un porte-garniture 2 comporte de manière classique une glissière verticale 20 de section en queue d'aronde adaptée pour recevoir le pied de fixation de la garniture 3. La glissière 20 comporte une extrémité inférieure 20B qui est ouverte et une extrémité supérieure 20A qui est fermée de manière à permettre une insertion de la garniture 3 depuis le bas vers le haut verticalement dans la glissière 20 du porte-garniture 2. Une fois la garniture 3 positionnée dans la glissière 20, un verrou 24 est mis en place pour retenir la garniture 3. De manière classique, le porte-garniture 2 comporte une glissière horizontale 23, ménagée dans la partie inférieure du porte-garniture 2, qui vient séparer la glissière verticale 20 en deux parties : une partie supérieure 21 dans laquelle est logée la garniture 3 et une partie inférieure 22 qui demeure vide. En référence à la figure 3, le verrou 24 est translaté de la gauche vers la droite dans la glissière horizontale 23 pour bloquer l'extrémité inférieure de la garniture 3 (non représentée sur la figure 3), la position du verrou 24 étant sécurisée au moyen de goupilles placées aux extrémités latérales du verrou 24. De manière classique, la glissière horizontale 23 est rectiligne et adaptée pour recevoir un verrou 24 qui est également rectiligne.

Du fait des tolérances de fabrication du verrou 24, de la glissière verticale 20 et du pied de fixation de la garniture 3, il existe un jeu vertical entre le pied de la garniture 3 et la partie supérieure 21 de la glissière verticale 20 du porte-garniture 2. Au cours du fonctionnement du véhicule ferroviaire, le porte-garniture 2 et sa garniture 3 sont sollicités mécaniquement ce qui génère une oscillation verticale de la garniture 2 appelée « battement vertical ». Sans parler du bruit généré, le battement vertical de la garniture 3 conduit à une usure de l'extrémité inférieure du pied de fixation de la garniture 2 ainsi qu'à une usure du verrou 24 ce qui contribue, d'une part à l'augmentation du jeu vertical entre le pied de la garniture 3 et le porte-garniture 2 et, d'autre part, à la génération d'un battement vertical de plus forte amplitude. Autrement dit, l'existence d'un jeu au montage conduit à la génération d'un battement vertical de la garniture 3 dont l'amplitude est croissante au fur et à mesure du fonctionnement du véhicule ferroviaire ce qui peut conduire à la rupture du verrou 24. Le véhicule ferroviaire doit alors être placé en maintenance ce qui présente des inconvénients sur le plan de la gestion du parc de véhicules ferroviaires.

Le document DE 2547530 A montre un dispositif de freinage d'après le préambule de la revendication 1.

Afin d'éliminer au moins certains de ces inconvénients, l'invention concerne un dispositif de freinage pour véhicule, notamment ferroviaire, comprenant un porte-garniture et au moins une garniture de freinage, le porte-garniture comportant une glissière verticale dans laquelle est logée la garniture de freinage et des moyens de verrouillage adaptés pour verrouiller ladite garniture dans ladite glissière verticale, le dispositif comportant des moyens élastiques agencés pour exercer un effort vertical sur ladite garniture de freinage afin de l'immobiliser dans la glissière verticale.

Les moyens élastiques du dispositif de freinage permettent avantageusement de mettre en butée la garniture de freinage dans la glissière verticale à son extrémité supérieure ou inférieure. La garniture étant bloquée verticalement, celle-ci ne peut plus osciller dans la glissière verticale au cours du fonctionnement du véhicule ferroviaire ce qui limite son usure, limite le bruit généré par le dispositif de freinage et augmente sa durée de vie. De manière avantageuse, le procédé de montage du dispositif de freinage demeure identique ce qui est avantageux.

De préférence, des moyens élastiques sont ménagés à l'extrémité supérieure de la glissière verticale de manière à appliquer un effort vertical dirigé vers le bas sur la garniture de freinage. De tels moyens élastiques sont simples à mettre en oeuvre et peuvent être appliqués directement à un porte-garniture selon l'art antérieur ce qui limite les coûts.

De manière préférée, les moyens élastiques possèdent une raideur comprise entre 80N.m⁻¹ et 100N.m⁻¹ ce qui permet un amortissement optimal de la garniture de freinage.

Selon un aspect de l'invention, les moyens élastiques se présentent sous la forme d'au moins un ressort, de préférence, un ressort à lame. Un ressort à lame présente un coût faible et permet d'exercer un effort vertical réparti sur la garniture de freinage.

Selon un autre aspect de l'invention, les moyens élastiques se présentent sous la forme d'au moins une couche d'amortissement, de préférence, en élastomère ou en silicone. Une couche d'amortissement est avantageuse en ce qu'elle ne nécessite aucun usinage ou modification du porte-garniture, cette dernière pouvant être simplement collée.

De préférence, les moyens de verrouillage sont adaptés pour exercer un effort vertical sur ladite garniture de freinage lors de son verrouillage dans la glissière verticale. Ainsi, lors de la mise en place de la garniture de freinage, il suffit à l'opérateur de déplacer les moyens de verrouillage pour immobiliser la garniture de freinage. Les étapes de montage sont ainsi limitées ce qui accélère les opérations de maintenance.

De préférence encore, les moyens de verrouillage se présentent sous la forme d'un verrou oblique monté coulissant dans une glissière oblique s'étendant horizontalement dans le porte-garniture. La coopération d'un verrou oblique avec une glissière oblique permet de serrer la garniture de freinage de manière progressive dans la glissière verticale par simple déplacement du verrou oblique, la compression des moyens élastiques étant alors progressive.

De manière préférée, la section transversale de la glissière oblique du porte-garniture est décroissante selon sa longueur.

Selon un aspect de l'invention, les moyens élastiques sont intégrés auxdits moyens de verrouillage. De manière avantageuse, les moyens de verrouillage permettent d'appliquer un effort vertical dirigé vers le haut sur la garniture de freinage pour pousser son extrémité supérieure en butée dans la glissière verticale. De manière très avantageuse, il suffit de remplacer les verrous de l'art antérieur par des moyens de verrouillage avec des moyens élastiques intégrés pour augmenter la durée de vie des dispositifs de freinage sans remplacement ou modification de pièces massives du dispositif de freinage (garniture ou porte-garniture).

De préférence, les moyens de verrouillage se présentent sous la forme d'un verrou élastique comportant un corps, dans lequel est formé un logement, un élément poussoir monté dans ledit logement et des moyens élastiques reliant l'élément poussoir au corps du verrou élastique de manière à permettre un déplacement de l'élément poussoir dans son logement entre une position rentrée et une position sortie. Un tel verrou possède un encombrement et des dimensions similaires à un verrou selon l'art antérieur et peut être simplement inséré et retiré de la glissière horizontale du porte-garniture. L'élément poussoir est en position rentrée lors de son insertion ou lors de son retrait et en position sortie lorsqu'il est en regard de la glissière verticale afin d'immobiliser la garniture de freinage.

L'invention sera mieux comprise à la lecture de la description qui va suivre, donnée uniquement à titre d'exemple, et se référant aux dessins annexés sur lesquels :
- la figure 1 est une représentation schématique d'un dispositif de freinage selon l'art antérieur monté sur un disque de frein d'un véhicule ferroviaire (déjà commenté) ;
- la figure 2 est une représentation schématique générale d'une face avant d'une garniture de frein montée dans un porte-garniture du dispositif de freinage de la figure 1 (déjà commenté);
- la figure 3 est une représentation schématique générale du porte-garniture du dispositif de freinage de la figure 1 (déjà commenté) ;
- la figure 4 est une représentation schématique d'une première forme de réalisation d'un dispositif de freinage selon l'invention ;
- la figure 5 est une représentation du dispositif de freinage de la figure 4 sans garniture de freinage ;
- la figure 6 représente une vue en coupe de côté du dispositif de freinage de la figure 4 ;
- la figure 7 est une première forme de réalisation des moyens élastiques d'un dispositif de freinage selon l'invention ;
- les figures 8A-8C représentent le verrouillage d'une garniture dans le dispositif de freinage de la figure 4 au moyen d'un verrou oblique ;
- les figures 9A-9C représentent le retrait de la garniture du dispositif de freinage de la figure 4, la figure 9C représentant une vue en perspective par-dessous du dispositif de la figure 9B ;
- la figure 10 est une représentation rapprochée de la partie supérieure d'un dispositif de freinage selon une deuxième forme de réalisation de l'invention ;
- la figure 11 est une représentation rapprochée de la partie supérieure d'un dispositif de freinage selon une troisième forme de réalisation de l'invention ;
- la figure 12 est une représentation rapprochée de la partie supérieure d'un dispositif de freinage selon une quatrième forme de réalisation de l'invention ;
- la figure 13 est une représentation rapprochée de la partie supérieure d'un dispositif de freinage selon une cinquième forme de réalisation de l'invention ;
- la figure 14 est une représentation d'un dispositif de freinage selon une sixième forme de réalisation de l'invention ; et
- la figure 15 est une représentation en coupe schématique du verrou du dispositif de la figure 14.

Il faut noter que les figures exposent l'invention de manière détaillée pour mettre en oeuvre l'invention, lesdites figures pouvant bien entendu servir à mieux définir l'invention le cas échéant.

### Dispositif de freinage

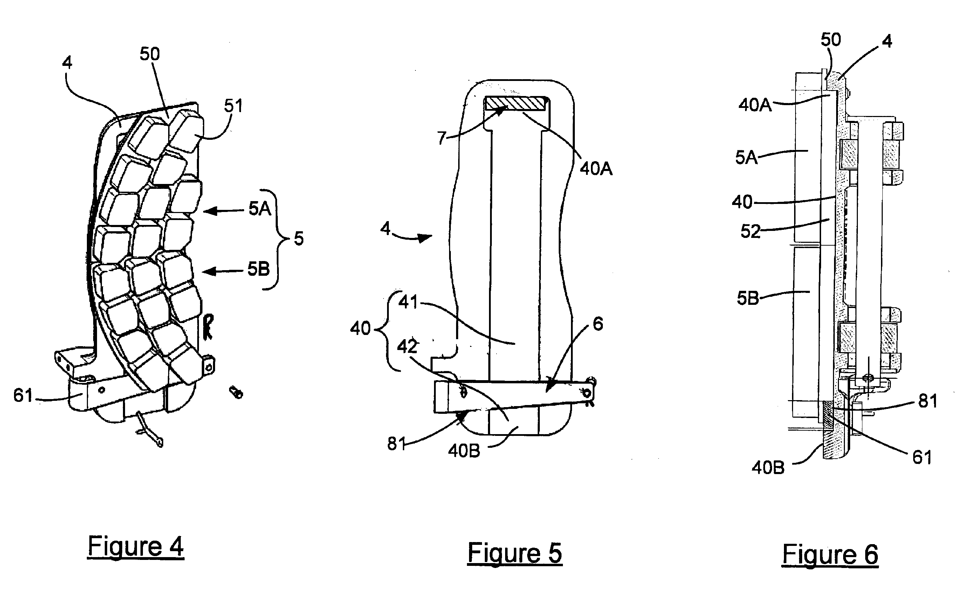

L'invention va être présentée pour un véhicule ferroviaire comportant un dispositif de freinage comprenant un porte-garniture 4 sur lequel est montée une garniture de freinage 5 comme illustré aux figures 4 et 6. Lors du freinage, la garniture 5 est appuyée sur le disque de frein d'un essieu du véhicule ferroviaire. Le frottement de la garniture 5 sur le disque de frein réduit la vitesse de rotation de l'essieu ce qui diminue la vitesse du véhicule ferroviaire.

### Garniture de freinage 5

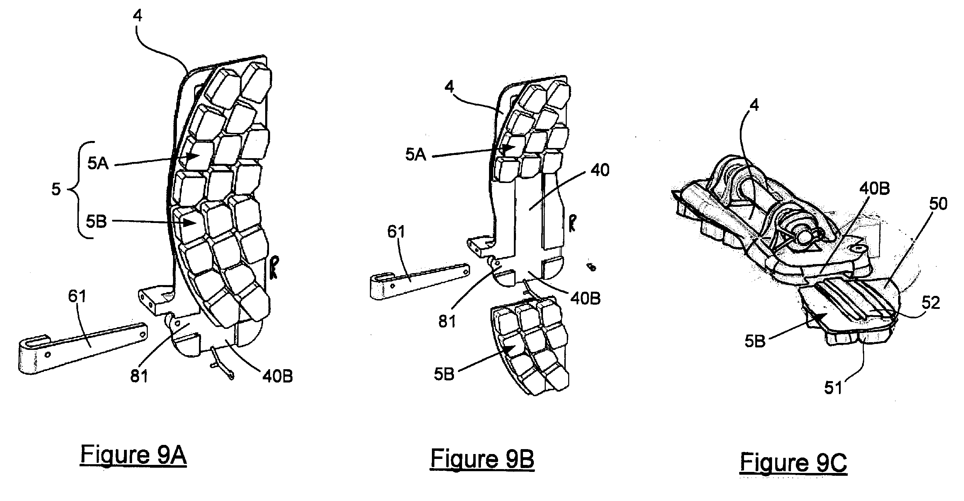

De manière similaire à l'art antérieur, en référence à la figure 4, la garniture de freinage 5 comporte une embase métallique 50 comportant, sur une première face, des plots de frottement 51 en matière organique ou en matière frittée destinés à venir en contact avec le disque de frein et, sur une deuxième face, des moyens de fixation, ici un pied de fixation 52, ayant une forme en queue d'aronde comme illustré sur la figure 9C. Dans cet exemple, en référence aux figures 4 et 6, la garniture de freinage 5 est modulaire et comporte une première partie supérieure 5A et une deuxième partie inférieure 5B mais il va de soi qu'une garniture 5 comprenant une unique partie ou plus de deux parties pourrait également convenir.

### Porte-garniture 4

En référence à la figure 5, le porte-garniture 4 du dispositif de freinage comporte de manière classique une glissière verticale 40 qui possède dans cet exemple une section en queue d'aronde adaptée pour recevoir le pied de fixation 52 de la garniture 5 comme illustré à la figure 9C. De manière classique, en référence à la figure 5, la glissière 40 comporte une extrémité inférieure 40B qui est ouverte et une extrémité supérieure 40A qui est fermée de manière à permettre une insertion de la garniture 5 depuis le bas vers le haut verticalement dans la glissière verticale 40 du porte-garniture 4.

Comme représenté sur la figure 5, le porte-garniture 4 comporte une glissière horizontale 81, ménagée dans la partie inférieure du porte-garniture 4, qui vient séparer la glissière verticale 40 en deux parties : une partie supérieure 41 dans laquelle est logée la garniture 5 (non représentée) et une partie inférieure 42 qui demeure vide. Dans cet exemple, conformément à la norme française NF F-11- 412 relative au matériel roulant ferroviaire, la longueur verticale de la partie supérieure 41 de la glissière du porte-garniture 4 est de l'ordre de 160 mm avec une tolérance de l'ordre de 0.5mm ou de l'ordre de 152 mm avec une tolérance de l'ordre de 0.3mm de manière à recevoir respectivement une garniture 5 dont la surface de frottement est de 400 cm² ou 350 cm². Dans cet exemple, la garniture 5 comporte deux demi-garnitures 5A, 5B symétriques dont la surface de frottement est égale à 200 cm² ou 175 cm².

Pour retenir la garniture 5 dans la partie supérieure 41 de la glissière verticale 40, le dispositif de freinage comporte des moyens de verrouillage 6 montés de manière amovible dans la glissière horizontale 81 du porte-garniture 4.

### Moyens de verrouillage 6

Dans cet exemple, en référence à la figure 4, les moyens de verrouillage 6 se présentent sous la forme d'un verrou 61 adapté pour être translaté de la gauche vers la droite dans la glissière horizontale 81 afin de bloquer l'extrémité inférieure de la garniture 5. Comme illustré sur la figure 4, des goupilles sont placées aux extrémités latérales du verrou 61 de manière à sécuriser sa position dans la glissière horizontale 81 du porte-garniture 4.

De manière classique, en référence aux figures 9A-9B, le verrou 61 se présente sous la forme d'une pièce longitudinale métallique dont une extrémité latérale est courbée à 180° de manière à former une gorge dans laquelle peut s'insérer une partie du porte-garniture 4 lorsque le verrou 61 est glissé dans la glissière horizontale 81 du porte-garniture 4.

### Moyens élastiques 7

Selon l'invention, en référence à la figure 5, le dispositif de freinage comporte des moyens élastiques 7 agencés pour exercer un effort vertical sur ladite garniture de freinage 5 pour la verrouiller dans la glissière verticale 40. Grâce aux moyens élastiques 7, le jeu de montage entre la garniture de freinage 5 et la glissière verticale 40 du porte-garniture 4 est supprimé dans la mesure où un effort mécanique vertical est appliqué à la garniture 5 pour la maintenir en butée. Le débattement vertical de la garniture 5 est alors réduit ce qui limite l'usure de la garniture 5 et l'usure des moyens de verrouillage 6. La sécurité et la fiabilité du dispositif de freinage sont alors accrues.

Plusieurs formes de réalisation d'un dispositif de freinage selon l'invention vont être dorénavant présentées. Par souci de clarté, les références utilisées pour décrire les éléments de structure ou fonction identique, équivalente ou similaire à celles des éléments des figues 4 et 5 sont les mêmes, pour simplifier la description.

### Première forme de réalisation

La structure d'une première forme de réalisation d'un dispositif de freinage selon l'invention va être maintenant présentée.

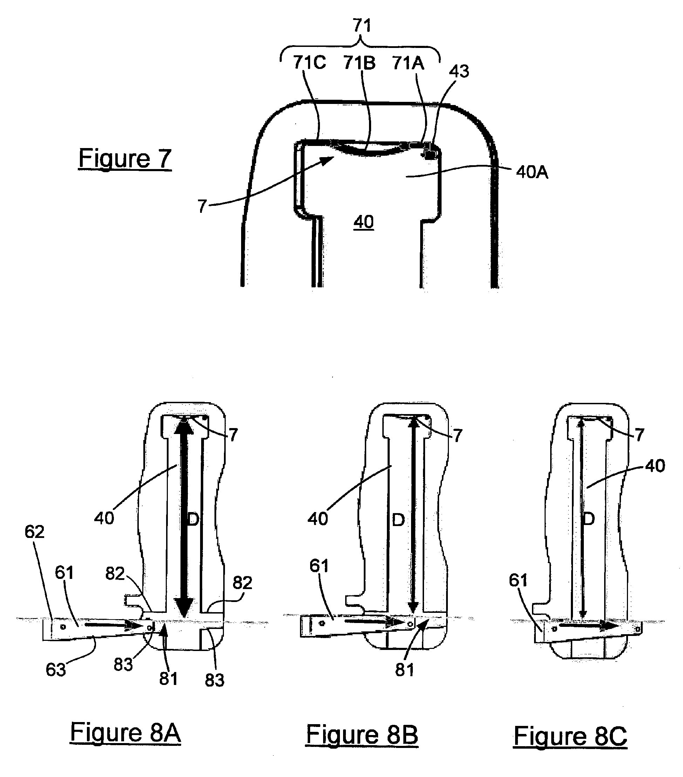

De préférence, les moyens élastiques 7, se présentent sous la forme d'un ou plusieurs ressorts dont la raideur est comprise entre 80N.m⁻¹ et 100N.m⁻¹. En référence à la figure 7, les moyens élastiques 7 se présentent sous la forme d'une lame ressort 71 montée à l'extrémité supérieure 40A de la glissière verticale 40 du porte-garniture 4. Dans cet exemple, la lame ressort 71 s'étend sensiblement longitudinalement dans la direction horizontale et comporte une première extrémité de liaison 71A, une partie centrale bombée 71B et une deuxième extrémité 71C qui est ici libre. La lame ressort 71 est bombée de manière à pouvoir se déformer si un effort mécanique est appliqué verticalement vers le haut sur la lame ressort 71. Comme illustré sur la figure 7, la lame ressort 71 est reliée à son extrémité de liaison droite 71A par un élément de fixation 43 formé à l'extrémité supérieure droite de la glissière verticale 40. Il va de soi que d'autres moyens de fixation pourraient également convenir pour maintenir la lame ressort 71 à l'extrémité supérieure 40A de la glissière verticale 40 du porte-garniture 4.

Ainsi, lorsque la garniture 5 est introduite verticalement vers le haut dans la glissière verticale 40, la garniture 5 vient en butée avec la partie bombée 71 B de la lame ressort 71. Pour mettre en place le verrou 61, il est nécessaire de compresser la lame ressort 71 afin que la garniture 5 ne s'étende pas dans la glissière horizontale 81. La lame ressort 71 exerce alors un effort vertical réciproque dirigé vers le bas sur ladite garniture de freinage 5. Une fois le verrou 61 mis en place, la garniture de freinage 5 est poussée contre la partie supérieure du verrou 61 par la lame ressort 71 qui continue à exercer un effort vertical dirigé vers le bas sur ladite garniture de freinage 5. Autrement dit, la garniture de freinage 5 est précontrainte dans la glissière verticale 40. Tout jeu de montage est alors supprimé et la génération d'un débattement vertical de la garniture 5 dans la glissière verticale 40 est limitée.

De manière préférée, en référence aux figures 8A-8C, le verrou de verrouillage est un verrou oblique 61, c'est-à-dire, que la section transversale du corps du verrou 61 est croissante sur au moins une portion longitudinale du verrou. Comme cela sera détaillé par la suite, un verrou oblique 61 permet de pousser la garniture 5 contre les moyens élastiques 7 lors du verrou 61 dans la glissière horizontale 81. Dans cet exemple, comme illustré sur la figure 8A, le verrou oblique 61 est évasé de la droite vers la gauche et est adapté pour glisser dans une glissière horizontale oblique 81 qui est évasée de la droite vers la gauche. Autrement dit, en référence à la figure 8A, le verrou oblique 61 comporte un bord supérieur horizontal 62 et un bord inférieur oblique 63. De manière similaire, en référence à la figure 8A, la glissière horizontale oblique 81 comporte un bord supérieur horizontal 82 et un bord inférieur oblique 83, les bords 82, 83 de la glissière horizontale 81 étant chacun formés de deux parties séparées par la glissière verticale 40 du porte-garniture 4. De préférence, l'inclinaison des bords obliques 63, 83 par rapport à la direction horizontale est comprise entre 3° et 15°, une inclinaison inférieure à 3° ne permettant pas d'exercer un effort vertical suffisant tandis qu'une inclinaison supérieure à 15° n'est pas compatible avec les dimensions du porte-garniture 4.

Par comparaison à un verrou rectiligne classique selon l'art antérieur comportant un bord supérieur horizontal et un bord inférieur horizontal, un verrou oblique 61 permet de déplacer la garniture 5 verticalement vers le haut lors du déplacement horizontal du verrou oblique 61 dans la glissière horizontale oblique 81.

Au début du verrouillage de la garniture 5, en référence à la figure 8A, le bord inférieur oblique 63 du verrou 61 est en appui sur le bord inférieur oblique 83 de la glissière 81. Par la suite, on définit une distance de montage D entre l'extrémité supérieure de la glissière verticale 40 et le bord supérieure 62 du verrou 61 comme illustré aux figures 8A-8C. Cette distance de montage D correspond à l'espace dont dispose la garniture 5 pour se déplacer lorsqu'elle est placée dans la partie supérieure de la glissière verticale 40 et bloquée par le verrou oblique 61.

Lors du déplacement horizontal du verrou oblique 61 de la gauche vers la droite, en référence à la figure 8B, le verrou 61 se déplace également verticalement vers le haut par effet de coin du fait du glissement du bord inférieur oblique 63 du verrou 61 sur le bord inférieur oblique 83 de la glissière horizontale 81. Au cours de cette étape, la distance de montage D diminue, le verrou oblique 61 poussant la garniture 5 verticalement vers le haut. Comme l'extrémité supérieure de la garniture 5 est en contact avec les moyens élastiques 7, le déplacement du verrou oblique 61 dans sa glissière horizontale oblique 81 est proportionnel à l'effort vertical appliqué par les moyens de ressort 7 sur la garniture de freinage 5. Autrement dit, plus le verrou oblique 61 est proche de sa position de verrouillage, plus la garniture 5 exerce un effort sur le bord supérieur 62 du verrou oblique 61 du fait des moyens élastiques 7. L'effort vertical des moyens élastiques 7 est ainsi progressif lors du verrouillage ce qui facilite le montage du dispositif de freinage.

En référence à la figure 8C, une fois le verrou oblique 61 sécurisé par des goupilles en position finale, la garniture 5 est bloquée entre les moyens élastiques 7 et le bord supérieur horizontal 62 du verrou 61, la distance de montage D est minimale et tout jeu de montage est compensé par les moyens élastiques 7.

Pour démonter une garniture de freinage 5 au cours d'une opération de maintenance, en référence aux figures 9A-9C, il suffit de retirer les goupilles puis de translater horizontalement le verrou oblique 61 vers la gauche (Figure 9A) de manière à libérer l'accès à l'extrémité inférieure 40B de la glissière verticale 40. La partie inférieure 5B de la garniture 5 peut alors être retirée par glissement de son pied de fixation 52 dans la glissière horizontale 40 depuis son extrémité inférieure ouverte 40B (Figures 9B et 9C). La partie supérieure 5A de la garniture 5 peut être retirée de manière similaire.

### Autres formes de réalisation

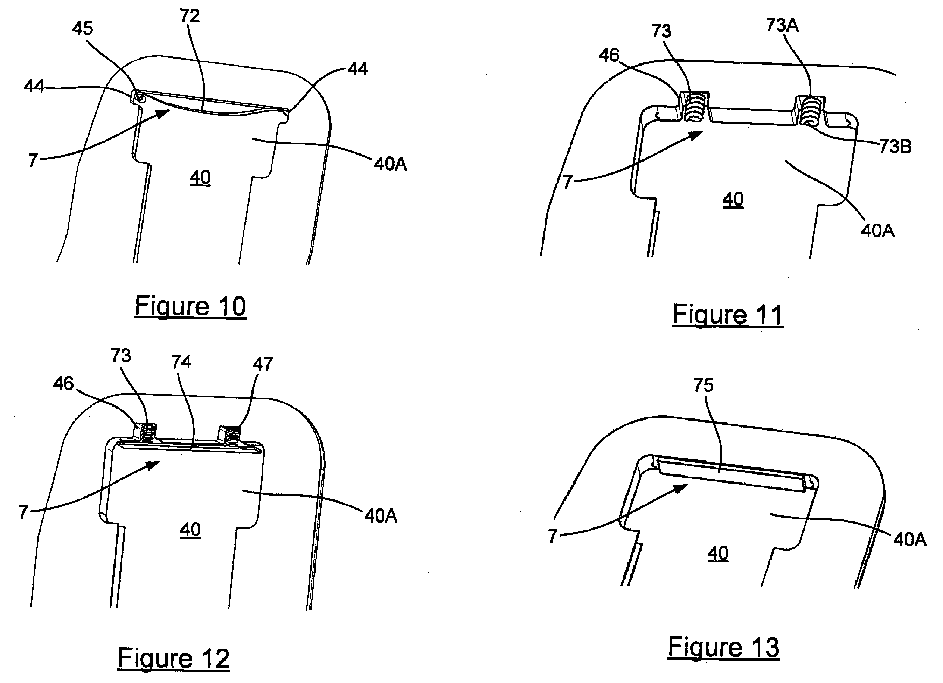

Plusieurs autres formes de réalisation de moyens élastiques 7 sont décrites en référence aux figures 10 à 13. Ces moyens élastiques 7 remplissent une fonction similaire aux moyens élastiques de la forme de réalisation de la figure 8 et sont utilisés avec ou sans verrou oblique 61.

Ainsi, de manière alternative, les moyens élastiques 7 peuvent se présenter sous la forme d'une lame ressort 72 (Figure 10) s'étendant sensiblement longitudinalement selon la direction horizontale et dont les extrémités sont montées dans des cavités latérales 44 formées à l'extrémité supérieure des bords latéraux de la glissière verticale 40. Dans cet exemple, l'extrémité gauche de la lame ressort 72 est fixée à un élément de fixation 45 solidaire du porte-garniture 4 et formé dans la cavité latérale gauche 44 de la glissière verticale 40, l'extrémité droite de la lame ressort 72 étant pour sa part en appui dans la cavité latérale droite 44 de la glissière verticale 40. La partie centrale de la lame ressort 72 est ondulée et comporte au moins une portion bombée adaptée pour exercer un effort vertical dirigé vers le bas sur la garniture de freinage 5. La lame ressort 72 telle que présentée à la figure 10 est montée de manière fixe dans les cavités latérales 44 de la glissière verticale 40 ce qui améliore la fiabilité de l'ensemble, en particulier, à l'encontre des vibrations.

De manière alternative, les moyens élastiques 7 peuvent se présenter sous la forme d'un ou plusieurs ressorts 73 (Figure 11) s'étendant verticalement et dont l'extrémité supérieure 73A est solidaire du porte-garniture 4 et dont l'extrémité inférieure 73B est libre. Dans cet exemple, le porte-garniture 4 comporte deux cavités supérieures 46 formées dans le bord supérieur de la glissière verticale 40, chacune des cavités supérieures 46 logeant un ressort 73 dont seul l'extrémité inférieure 73B est en saillie dans la zone de glissement de la glissière verticale 40 comme représenté sur la figure 11. Ainsi, lorsque la garniture de freinage 5 est glissée dans la glissière verticale 40, l'extrémité supérieure de la garniture 5 vient en contact avec les extrémités inférieures 73B des ressorts 73 qui exercent alors un effort vertical dirigé vers le bas sur la garniture de freinage 5. De préférence, les ressorts 73 sont des ressorts hélicoïdaux.

A titre de variante, en référence à la figure 12, une lame de butée 74 peut être fixée à l'extrémité libre 73B des ressorts 73 dans la zone de glissement de la glissière verticale 40 de manière à ce que la lame de butée 74 applique un effort réparti sur la garniture de freinage 5. De manière préférée, la longueur de la lame de butée 74 est supérieure ou égale à la longueur de la surface d'appui de la garniture 5. De préférence, en référence à la figure 12, chaque ressort 73 est fixé à une tige de liaison 47 s'étendant verticalement dans une cavité supérieure 46 de la glissière verticale 40.

De manière alternative, en référence à la figure 13, les moyens élastiques 7 peuvent se présenter sous la forme d'une couche d'amortissement 75 fixée sur le bord supérieur de la glissière verticale 40. De préférence, la couche d'amortissement 75 est en élastomère ou en silicone.

Il a été précédemment présenté un dispositif de freinage comportant des moyens élastiques 7 montés à l'extrémité supérieure 40A de la glissière verticale 40 mais il va de soi que ces derniers peuvent être montés à divers endroits du dispositif de freinage.

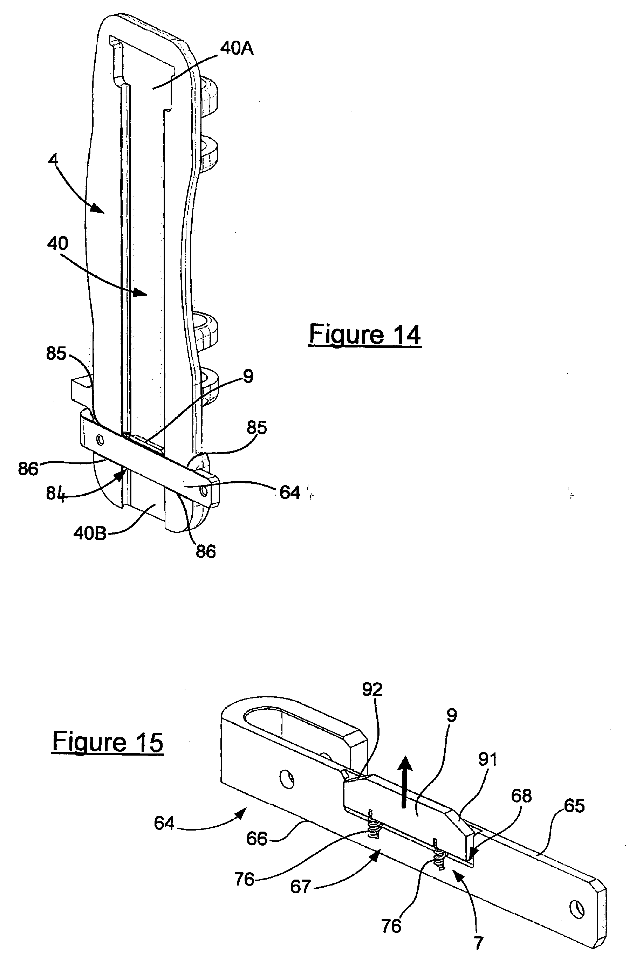

A titre d'exemple, il est illustré à la figure 14 un dispositif de freinage comportant des moyens élastiques intégrés à un verrou de blocage de la garniture 5. Il va de soi que les moyens élastiques 7 peuvent être intégrés à tout type de moyens de verrouillage 6.

En référence aux figures 14 et 15, le dispositif de freinage comporte un verrou longitudinal élastique 64 dont les dimensions globales sont similaires à celles d'un verrou rectiligne selon l'art antérieur. De manière avantageuse, on peut utiliser un verrou élastique 64 selon l'invention en lieu et place d'un verrou rectiligne selon l'art antérieur dans un dispositif de freinage selon l'art antérieur ; ni le porte-garniture 4, ni la garniture 5 ne devant être modifiés. Pour coopérer avec le verrou rectiligne 64, le porte-garniture 4 comporte une glissière horizontale rectiligne 84 de dimensions classiques.

En référence à la figure 15, le verrou élastique 64 comporte un bord supérieur horizontal 65 et un bord inférieur horizontal 66. De manière similaire, en référence à la figure 14, la glissière horizontale rectiligne 84 comporte un bord supérieur horizontal 85 et un bord inférieur horizontal 86, les bords 85, 86 étant chacun formés de deux parties séparées par la glissière verticale 40 du porte-garniture 4.

Comme illustré à la figure 15, le verrou élastique 64 comporte un corps avec une partie centrale 67, destinée à venir s'étendre dans la glissière verticale 40 en position de verrouillage, dans laquelle sont montés des moyens élastiques 7 adaptés pour exercer un effort vertical vers le haut sur ladite garniture de freinage 5 pour l'immobiliser dans la glissière verticale 40.

Dans cet exemple, en référence à la figure 15, les moyens élastiques 7 comportent un élément poussoir 9 de forme sensiblement rectangulaire et dont les coins supérieurs sont biseautés. Les moyens élastiques 7 comportent en outre des ressorts 76 dont une première extrémité est solidaire du bord inférieur de l'élément poussoir 9 et dont une deuxième extrémité est solidaire du corps du verrou élastique 64.

Un logement 68 est formé dans l'épaisseur de la partie centrale 67 du verrou élastique 64 pour recevoir l'élément poussoir 9, le logement étant accessible depuis le bord supérieur 65 du vérou élastique 64. La deuxième extrémité des ressorts 76 est fixée dans le fond du logement 68 de manière à autoriser un déplacement de l'élément poussoir 9 entre une position rentrée (figure 15) dans laquelle les ressorts 76 sont comprimés et l'élément poussoir 9 est logé dans le logement 68 et une position sortie (non représentée) dans laquelle les ressorts 76 sont détendus et l'élément poussoir 9 est en saillie depuis le bord supérieur horizontal 65 du verrou élastique 64.

Lors de l'insertion du verrou élastique 64, l'élément poussoir 9 est en position rentrée dans son logement 68 de manière à permettre son passage dans la glissière horizontale 84. En pratique, l'élément poussoir 9 est en appui sur le bord supérieur horizontal 85 de la glissière horizontale 84 ce qui force l'élément poussoir 9 à demeurer dans son logement 68.

Dès que l'élément poussoir 9 est en regard de la glissière verticale 40, celui-ci se déplace verticalement vers le haut pour être en saillie depuis le bord supérieur horizontal 65 du verrou élastique 64. Il en résulte qu'un effort vertical vers le haut est appliqué sur la garniture de freinage 5 pour l'immobiliser dans la glissière verticale 40. La garniture de freinage 5 est alors en butée contre l'extrémité supérieure 40A de la glissière verticale 40. Tout jeu de montage est ainsi supprimé, le débattement de la garniture 5 dans la glissière verticale 40 est limité.

Afin de faciliter le déplacement de l'élément poussoir 9 entre sa position rentrée et sa position sortie, les coins supérieurs de l'élément poussoir 9 sont biseautés de manière à former deux pentes de guidage 91, 92 dont la fonction est de permettre un déplacement progressif de l'élément poussoir 9 entre sa position rentrée et sa position sortie. Avant insertion, l'élément poussoir 9 du verrou élastique 64 est en position sortie. Lors de l'insertion du verrou élastique 64 dans le porte-garniture 4, la première pente de guidage 91, située à l'extrémité droite du verrou élastique 64, vient en contact avec le bord supérieur 85 de la glissière horizontale 84 qui, par effet de coin, déplace l'élément poussoir 9 dans son logement 68 de manière à ce que le bord supérieur 85 de la glissière horizontale 84 vienne ensuite en contact avec le bord supérieur de l'élément poussoir 9. Une fois la partie centrale 67 du verrou élastique 64 en regard de la glissière verticale 40, l'élément poussoir 9 se déplace en position sortie, le bord supérieur 85 de la glissière horizontale 84 n'interdisant plus son déplacement.

Lors du retrait du verrou élastique 64 en position de verrouillage, la deuxième pente de guidage 92, située à l'extrémité gauche du verrou élastique 64, vient en contact avec le bord supérieur 85 de la glissière horizontale 84 qui, par effet de coin, déplace l'élément poussoir 9 dans son logement 68 de manière à ce que le bord supérieur 85 de la glissière horizontale 84 vienne ensuite en contact avec le bord supérieur de l'élément poussoir 9.

Grâce aux pentes 91, 92 de l'élément poussoir 9, le verrou élastique 64 peut être inséré et retiré sans heurts de la glissière horizontale 84.

A titre d'alternative, le verrou élastique 64 peut comprendre un actionneur adapté pour activer les moyens élastiques du verrou élastique 64. A titre d'exemple, l'actionneur peut se présenter sous la forme d'une goupille montée entre le corps du verrou élastique 64 et l'élément poussoir 9 et adaptée pour maintenir ce dernier dans le logement 68. Une fois la partie centrale 67 du verrou élastique 64 en regard de la glissière verticale 40, la goupille est retirée de manière à ce que l'élément poussoir 9 s'étende en saillie et verrouille en position la garniture de frein 5.

Dans l'exemple de la figure 14, l'extrémité supérieure 40A de la glissière verticale 40 du porte-garniture 4 ne comporte pas de moyens élastiques mais il va de soi qu'elle pourrait en comporter pour réduire le jeu en fonctionnement de la garniture de freinage 5.

Il a été présenté précédemment un verrou élastique 64 de forme rectiligne mais il va de soi qu'un verrou de forme oblique, telle que présenté précédemment, pourrait également convenir. De même, il a été présenté précédemment un verrou élastique 64 avec des moyens élastiques 7 se présentant sous la forme de ressorts hélicoïdaux mais il va de soi qu'ils pourraient se présenter sous diverses formes telles qu'une lame ressort, une couche d'amortissement, etc.

## Revendications

1. Dispositif de freinage pour véhicule, notamment ferroviaire, comprenant un porte-garniture (4) et au moins une garniture de freinage (5), le porte-garniture (4) comportant une glissière verticale (40), possédant une section en queue d'aronde, dans laquelle est logée la garniture de freinage (5) et des moyens de verrouillage (6) adaptés pour verrouiller ladite garniture (5) dans ladite glissière verticale (40), dispositif **caractérisé par le fait qu'**il comporte des moyens élastiques (7) agencés pour exercer un effort vertical sur ladite garniture de freinage (5) pour l'immobiliser dans la glissière verticale (40).

2. Dispositif selon la revendication 1, dans lequel des moyens élastiques (7) sont ménagés à l'extrémité supérieure (40A) de la glissière verticale (40).

3. Dispositif selon l'une des revendications 1 à 2, dans lequel les moyens élastiques (7) possèdent une raideur comprise entre 80N.m⁻¹ et 100N.m⁻¹.

4. Dispositif selon l'une des revendications 1 à 3, dans lequel les moyens élastiques (7) se présentent sous la forme d'au moins un ressort (71, 72, 73), de préférence, un ressort à lame (71, 72).

5. Dispositif selon l'une des revendications 1 à 3, dans lequel les moyens élastiques (7) se présentent sous la forme d'au moins une couche d'amortissement (75), de préférence, en élastomère ou en silicone.

6. Dispositif selon l'une des revendications 1 à 5, dans lequel les moyens de verrouillage (6) sont adaptés pour exercer un effort vertical sur ladite garniture de freinage (5) lors de son verrouillage dans la glissière verticale (40).

7. Dispositif selon la revendication 6, dans lequel les moyens de verrouillage (6) se présentent sous la forme d'un verrou oblique (61) monté coulissant dans une glissière oblique (81) s'étendant horizontalement dans le porte-garniture (4).

8. Dispositif selon la revendication 7, dans lequel la section transversale de la glissière oblique (81) du porte-garniture (4) est décroissante selon sa longueur.

9. Dispositif selon l'une des revendications 1 à 8, dans lequel des moyens élastiques (7) sont intégrés auxdits moyens de verrouillage (6).

10. Dispositif selon la revendication 9, dans lequel les moyens de verrouillage (6) se présentent sous la forme d'un verrou élastique (64) comportant :
- un corps, dans lequel est formé un logement (68),
- un élément poussoir (9) monté dans ledit logement (68), et
- des moyens élastiques (7) reliant l'élément poussoir (9) au corps du verrou élastique (64) de manière à permettre un déplacement de l'élément poussoir (9) dans son logement (68) entre une position rentrée et une position sortie.

## Patentansprüche

1. Bremsvorrichtung für ein Fahrzeug, insbesondere ein Schienenfahrzeug, enthaltend einen Belagträger (4) und mindestens einen Bremsbelag (5), wobei der Belagträger (4) eine vertikale Gleitschiene (40) aufweist, die einen Schwalbenschwanzabschnitt besitzt, in dem der Bremsbelag (5) gelagert ist, und Verriegelungsmittel (6), die so angepasst sind, dass sie den Bremsbelag (5) in der vertikalen Gleitschiene (40) verriegeln, wobei die Vorrichtung **dadurch gekennzeichnet ist, dass** sie elastische Mittel (7) aufweist, die so angeordnet sind, dass sie eine vertikale Kraft auf den Bremsbelag (5) ausüben, um ihn in der vertikalen Gleitschiene (40) zu blockieren.

2. Vorrichtung nach Anspruch 1, wobei elastische Mittel (7) am oberen Ende (40A) der vertikalen Gleitschiene (40) vorgesehen sind.

3. Vorrichtung nach einem der Ansprüche 1 oder 2, wobei die elastischen Mittel (7) eine Steifigkeit zwischen 80 Nm⁻¹ und 100 Nm⁻¹ besitzen.

4. Vorrichtung nach einem der Ansprüche 1 bis 3, wobei die elastischen Mittel (7) in Form von mindestens einer Feder (71, 72, 73), vorzugsweise einer Blattfeder (71, 72), vorliegen.

5. Vorrichtung nach einem der Ansprüche 1 bis 3, wobei die elastischen Mittel (7) in Form von mindestens einer Dämpfungsschicht (75), vorzugsweise aus Elastomer oder Silikon, vorliegen.

6. Vorrichtung nach einem der Ansprüche 1 bis 5, wobei die Verriegelungsmittel (6) so angepasst sind, dass sie während seiner Verriegelung auf der vertikalen Gleitschiene (40) eine vertikale Kraft auf den Bremsbelag (5) ausüben.

7. Vorrichtung nach Anspruch 6, wobei die Verriegelungsmittel (6) in Form einer schrägen Verriegelung (61) vorliegen, die gleitend in einer schrägen Gleitschiene (81) montiert ist, die sich horizontal in den Belagträger (4) erstreckt.

8. Vorrichtung nach Anspruch 7, wobei der Querschnitt der schrägen Gleitschiene (81) des Belagträgers (4) entlang ihrer Länge abnimmt.

9. Vorrichtung nach einem der Ansprüche 1 bis 8, wobei die elastischen Mittel (7) in die Verriegelungsmittel (6) integriert sind.

10. Vorrichtung nach Anspruch 9, wobei die Verriegelungsmittel (6) in Form einer elastischen Verriegelung (64) vorliegen, die Folgendes aufweist:
- einen Körper, in dem eine Aufnahme (68) ausgebildet ist,
- ein Druckelement (9), das in der Aufnahme (68) montiert ist, und
- elastische Mittel (7), die das Druckelement (9) mit dem Körper der elastischen Verriegelung (64) so verbinden, dass sie eine Verschiebung des Druckelements (9) in seiner Aufnahme (68) zwischen einer zurückgezogenen Position und einer ausgefahrenen Position gestatten.

## Claims

1. Braking device for a vehicle, particularly a railway vehicle, comprising a backplate (4) and at least one brake lining (5), the backplate (4) comprising a vertical slide (40) having a dovetail-shaped section in which the brake lining (5) is housed and locking means (6) capable of locking said lining (5) in said vertical slide (40), said device being **characterised in that in that** it comprises resilient means (7) arranged to exert a vertical force on said brake lining (5) to immobilise it in the vertical slide (40).

2. Device according to claim 1, wherein resilient means (7) are provided at the upper end (40A) of the vertical slide (40).

3. Device according to one of claims 1 to 2, wherein the resilient means (7) have a stiffness of between 80 N.m⁻¹ and 100 N.m⁻¹.

4. Device according to one of claims 1 to 3, wherein the resilient means (7) are in the form of at least one spring (71, 72, 73), preferably a leaf spring (71, 72).

5. Device according to one of claims 1 to 3, wherein the resilient means (7) are in the form of at least one damping layer (75), preferably made of elastomer or silicone.

6. Device according to one of claims 1 to 5, wherein the locking means (6) are capable of exerting a vertical force on said brake lining (5) when it is locked in the vertical slide (40).

7. Device according to claim 6, wherein the locking means (6) are in the form of an oblique bolt (61) slidably mounted in an oblique slide (81) extending horizontally in the backplate (4).

8. Device according to claim 7, wherein the cross-section of the oblique slide (81) of the backplate (4) decreases along its length.

9. Device according to one of claims 1 to 8, wherein resilient means (7) are integrated in said locking means (6).

10. Device according to claim 9, wherein the locking means (6) are in the form of a resilient bolt (64) comprising:
- a body in which a recess (68) is formed,
- a pushing element (9) mounted in said recess (68), and
- resilient means (7) connecting the pushing element (9) to the body of the resilient bolt (64) so as to allow displacement of the pushing element (9) in its recess (68) between a retracted position and an extended position.
